# EUROPÄISCHE PATENTSCHRIFT

(11) **EP 0 586 695 B1**
(45) Veröffentlichungstag und Bekanntmachung des Hinweises auf die Patenterteilung: **03.09.1997**
(21) Anmeldenummer: 93920535.7
(22) Anmeldetag: 16.03.1993
(51) Int. Cl.: B29B 9/06, B29B 13/06

(54) **VORRICHTUNG ZUM ABKÜHLEN, GRANULIEREN UND TROCKNEN VON SCHMELZFLÜSSIG AUS DÜSEN AUSTRETENDEN STRÄNGEN AUS THERMOPLASTISCHEN KUNSTSTOFFEN**
DEVICE FOR COOLING, GRANULATING AND DRYING MOLTEN STRANDS OF SYNTHETIC THERMOPLASTIC MATERIAL EMERGING FROM DIES
PROCEDE VISANT A REFROIDIR, GRANULER ET SECHER DES JONCS EN MATIERE PLASTIQUE SORTANT EN FUSION DE FILIERES

(30) Priorität: 23.03.1992 DE 4209373
(43) Veröffentlichungstag der Anmeldung: 16.03.1994
(73) Patentinhaber: Rieter Automatik GmbH, D-63757 Grossostheim (DE)
(72) Erfinder: HUNKE, Friedrich, W-8754 Grossostheim 2 (DE)
(74) Vertreter: Bardehle, Heinz, Dipl.-Ing.
(86) Internationale Anmeldenummer: EP9300604
(87) Internationale Veröffentlichungsnummer: WO9318901

(56) Entgegenhaltungen:
- EP-A- 0 126 459
- EP-A- 0 143 944
- EP-A- 0 406 535
- DE-C- 3 941 392
- FR-A- 1 557 367
- US-A- 2 975 483
- PATENT ABSTRACTS OF JAPAN vol. 10, no. 368 (M-543)(2425) 9. Dezember 1986 & JP,A,61 162 305 (MITSUBISHI RAYON CO. LTD.) 23. Juli 1986 siehe Zusammenfassung

## Beschreibung

Die Erfindung bezieht sich auf eine Vorrichtung zum Abkühlen, Granulieren und Trocknen von schmelzflüssig aus Düsen austretenden Strängen aus thermoplastischen Kunststoffen mit einer die Stränge in einem Kühlflüssigkeitsbad führenden Kühleinrichtung, der ein eine Messerwalze enthaltendes Granulatorgehäuse und ein daran angeschlossener Abführschacht mit einem Sieb zur Kühlflüssigkeitsabscheidung nachgeordnet sind.

Eine derartige Vorrichtung ist aus der US-A- 2 975 483 bekannt. Bei dieser Vorrichtung werden durch Kühlwasser besprühte Stränge mittels eines Transportbandes einem Granulatorgehäuse zugeführt, in dem die Stränge von zwei Einzugswalzen erfasst und einer Messerwalze zugeführt werden. Das von der Messerwalze geschnittene Granulat gelangt von diesem in einen sich verjüngenden Abführschacht, der in Bezug auf die Messerwalze so gestaltet ist, daß das Granulat auf dessen eine Wandung aufprallt, auf dieser herabgleitet und auf ein mit Kühlwasser besprühtes Transportband geleitet wird, das siebartig ausgebildet ist und somit einen Ablauf des Kühlwassers ermöglicht, das auf das von dem Transportband geführte Granulat gesprüht wird. Das Granulat verliert dann auf dem durch das Transportband bestimmten Transportweg einen Teil seines Kühlwassers und gelangt schließlich in einen Trockner mit einem Flügelrad, das durch dem Granulat aufgedrückte Zentrifugalkräfte diesen noch anhaltendes Wasser entfernt.

Eine weitere Vorrichtung zum Granulieren und zur Kühlflüssigkeitableitung ist aus der DE-B-26 27 263 bekannt. Bei dieser Vorrichtung besteht die Kühleinrichtung aus einer an ihrem oberen Ende mit Kühlwasser beschickten Ablaufrinne, die an ihrem unteren Ende in ein eine Messerwalze enthaltendes Granulatorgehäuse einmündet. An das Granulatorgehäuse ist ein Abführschacht angeschlossen, und zwar in horizontaler Richtung, da das Granulatorgehäuse aufgrund einer gerundeten Rückwand die von der Messerwalze von den Strängen abgeschnittenen Granulatkörner entsprechend umlenkt. Die Granulatkörner verlassen das Gehäuse im wesentlichen in horizontaler Richtung, was durch einen im Gehäuse dicht neben der Schnittstelle der Messerwalze vorgesehenen Kühlwasserzulauf unterstützt wird. Das Kühlwasser schwemmt die abgeschnittenen Granulatkörner längs der gerundeten Rückwand des Granulatorgehäuses in die Horizontalrichtung über ein im Boden des horizontal gerichteten Abführschachtes angeordneten Siebs hinweg, wobei durch das Sieb infolge Schwerkraft das das Granulat begleitende Wasser teilweise abgeführt wird. Die Intensität dieser Wasserabscheidung ist relativ gering, da, wie gesagt, hierfür nur die auf das Wasser wirkende Schwerkraft ausgenutzt wird. Die Folge davon ist, daß das den Abführschacht verlassende Granulat noch eine erhebliche Oberflächenfeuchtigkeit aufweist.

Der Erfindung liegt die Aufgabe zugrunde, den Trocknungsgrad von Granulat, das mittels einer Messerwalze von nassen bzw. feuchten Strängen abgetrennt worden ist, zu erhöhen und dabei eine besondere Trocknungsvorrichtung, die mit einem geringen Energiebedarf auskommt, zu schaffen.

Erfindungsgemäß geschieht dies dadurch, daß das Sieb derart angeordnet ist, daß die von der Messerwalze von den Strängen abgetrennten Granulatkörner im wesentlichen mit der den Granulatkörnern von der Messerwalze gegebenen Geschwindigkeit auf direktem Wege ohne Umlenkung auf das Sieb auftreffen, das für den Trocknungsvorgang die kinetische Energie der Granulatkörner ausnutzt.

Durch die Erfindung wird die von der schnellaufenden Messerwalze auf die Granulatkörner übertragene erhebliche Kinetische Energie ausgenutzt, das Wasser von den Granulatkörnern abzuschleudern. Die Granulatkörner werden nämlich jeweils von den einzelnen Messern der Messerwalze abgeschnitten und etwa tangential von der Messerwalze abgeschleudert. Dabei ergeben sich für die Granulatkörner Geschwindigkeiten in der Größenordnung von 10 m pro/Sec.. Wenn ein Granulatkorn mit derartiger Geschwindigkeit auf ein Sieb auftrifft, wird am Granulatkorn anhaftendes Wasser praktisch vollständig von diesem weggeschleudert, wobei das Wasser durch das Sieb hindurchtreten und damit abgeleitet werden kann. Um dies zu erreichen, ist das Sieb derart angeordnet, daß die von der Messerwalze von den Strängen abgetrennten Granulatkörner ohne eine dazwischen liegende Umlenkung oder Aufprallstelle, also auf direktem Wege auf das Sieb auftreffen.

Die den Granulatkörnern gegebene kinetische Energie wird aufgrund des notwendigen Antriebs der Messerwalze automatisch aufgebracht, so daß also für die Beschleunigung der Granulatkörner praktisch auf die Umfangsgeschwindigkeit der Messerwalze keine zusätzliche Energie erforderlich ist.

Zweckmäßig ordnet man das Sieb mit einem solchen Winkel in bezug auf die Auftreffrichtung der Granulatkörner an, daß diese in Richtung auf ein nachgeordnetes Sieb abprallen. In diesem Falle wird ein weiteres Sieb für das Abschleudern von Restwasser von dem Granulat ausgenutzt, da die Granulatkörner in diesem Falle zweimal nacheinander auf ein Sieb auftreffen. Diese Hintereinanderschaltung von Sieben kann man auch mehrfach vorsehen.

Es ist auch möglich, mindestens eines der Siebe als Bogensieb auszubilden, wie ein solches z. B. in der DE-C-31 05 609 dargestellt ist. Dieses Bogensieb kann so angeordnet werden, daß Granulatkörner entweder schräg auf dieses auftreffen oder tangential an das Bogensieb herangeführt werden.

Um an den Sieben gegebenenfalls anhaftende Kühlflüssigkeit abzuleiten, kann man mindestens einem Sieb eine Zuführung für aufzublasende Luft zuordnen. Die so in den Strom des Granulates eingeblasene Luft entweicht dann über die Siebe und reißt an diesem gegebenenfalls haftendes Wasser mit.

Die Menge des durch dem Granulator nachgeschaltete Siebe abzuführenden Wassers läßt sich dadurch verringern, daß man dem Granulatorgehäuse einen Vorabscheider für die Kühlflüssigkeit vorordnet. Ein solcher Vorabscheider ist an sich aus der DE-C-33 36 032 bekannt. Es erreicht dann nur noch relativ wenig Restwasser den Granulator, so daß nur dieses von den Sieben abgeführt werden muß.

Die den Granulatkörnern schließlich noch innewohnende Wärme läßt sich in bekannter Weise dazu ausnutzen, durch Verdampfung Restwasser von den Granulatkörnern abzuführen. Um dies zu erreichen, stellt man die Kühlung der Stränge so ein, daß eine den Granulatkörnern innewohnende Wärme belassen ist, die nach Abprall der Granulatkörner auf das bzw. die Siebe für eine weitgehende Verdampfung von die Granulatkörner noch benetzendes Wasser ausreicht.

Ausführungsbeispiele der Erfindung sind in den Figuren dargestellt. Es zeigen:
- Figur 1: die Vorrichtung mit einem dem Granulator nachgeschalteten Sieb und einer aus Transportbändern bestehenden Kühleinrichtung,
- Figur 2: die Ausgestaltung des dem Granulator nachgeschalteten Siebes als Bogensieb,
- Figur 3: die Vorrichtung mit zwei nachgeschalteten Sieben und einer Ablaufrinne als Kühleinrichtung,
- Figur 4: eine Mehrzahl von dem Granulator nachgeschalteten Sieben mit Einlässen für einzublasende Luft.

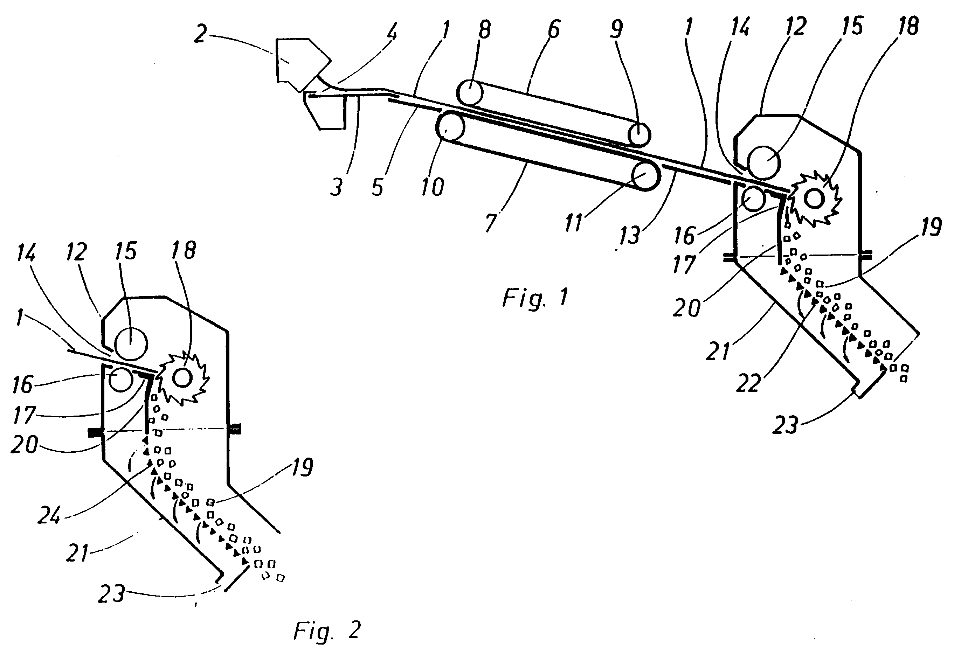

Figur 1 zeigt in schematischer, vereinfachter Darstellung eine Vorrichtung zum Abkühlen Granulieren und Trocknen von Strängen 1, die schmelzflüssig aus Düsen des Düserkopfes 2 austreten. Die Stränge 1 werden von der Zuleitvorrichtung 3 aufgefangen, die an ihrem linken Ende mit einem Überlauf 4 für den Zutritt von Kühlwasser versehen ist, das über die Zuleitvorrichtung 3 abfließt und dabei die Stränge 1 mitnimmt. Die Zuleitvorrichtung 3 leitet die Stränge 1 dann über das Leitblech 5 einem Paar von Transportbändern 6 und 7 zu, die jeweils mittels Umlenkrollen 8, 9 sowie 10, 11 die Stränge 1 derart führen, daß die nebeneinanderlaufenden Teile der Transportbänder 6 und 7 einen Vorschub für die Stränge in Richtung auf das Granulatorgehäuse 12 bewirken. Hinter dem Auslauf der beiden Transportbänder 6 und 7 im Bereich zwischen den Umlenkrollen 9 und 11 ist ein weiteres Leitblech 13 angeordnet, das die Stränge 1 dem Eingang 14 des Granulatorgehäuses 12 zuführt. Das von der Zuleitvorrichtung 3 gelieferte Kühlwasser läuft dabei innerhalb dieser Kühleirrichtung über das Leitblech 5, zwischen den beiden Transportbändern 6 und 7 hindurch und über das Leitblech 13 ab, kühlt dabei die Stränge 1 und gelangt dann in den Eingang 14 des Granulatorgehäuses 12.

Unmittelbar hinter dem Eingang 14 des Granulatorgehäuses 12 werden die Stränge 1 von den beiden Einzugswalzen 15 und 16 erfaßt und mit definierter Vorschubgeschwindigkeit über das Gegenmesser 17 der Messerwalze 18 zugeführt. Die Messerwalze 18 dreht sich in Richtung des eingezeichneten Pfeils mit hoher Drehzahl, z. B. 1000 U/min. Die einzelnen Messer der Messerwalze 18 schneiden entsprechend der Vorschubgeschwindigkeit der Stränge 1 entsprechend lange Granulatkörner 19 von den Strängen 1 ab, die aufgrund der relativ hohen Umfangsgeschwindigkeit der Messerwalze 18 mit gleicher Geschwindigkeit von der Messerwalze 18 weggeschleudert werden. Die Granulatkörner 19 werden dabei etwa tangential von der Messerwalze 18 weggeschleudert und zwar gemäß dem eingezeichneten Pfeil unter einem mehr oder minder großen Winkel von der Stütze 20 des Gegenmessers 17 weg.

An das Granulatorgehäuse 12 ist der Abführschacht 21 angeflanscht, der das Sieb 22 enthält. Das Sieb 22 ragt in einen solchen Winkel innerhalb des Abführschachtes 21 soweit in Richtung auf das Granulatorgehäuse 12, daß die Granulatkörner 19 von der Messerwalze 18 auf direktem Wege auf das Sieb 22 auftreffen. Die den Granulatkörnern 19 von der Messerwalze 18 aufgedrückte kinetische Energie wird also weitgehend für den Aufprall der Granulatkörner 19 auf das Sieb 22 ausgenutzt, so daß an den Granulatkörnern 19 anhaftendes Wasser von diesen praktisch vollständig abgeschleudert wird. Das Wasser kann dann durch das Sieb 22 entsprechend den eingezeichneten gekrümmten Pfeilen abfließen und läuft im Inneren des Ablaufschachtes 21 herunter und über den Ablaufstutzen 23 ab.

In der vorstehend beschriebenen Vorrichtung wird ohne zusätzlichen Energieaufwand eine besondere Trocknungsvorrichtung zur Wirkung gebracht, nämlich das Sieb 22, wobei die von der Messerwalze 18 den Granulatkörnern 19 automatisch gegebene kinetische Energie in vollem Umfang für den Trocknungsvorgang ausgenutzt wird.

Figur 2 zeigt eine Abwandlung der Vorrichtung gemäß Figur 1, wobei es sich um die Gestaltung des Siebes handelt, das hier als Bogensieb 24 ausgebildet ist. Die Granulatkörner 19 treffen hier in einem sehr stumpfen Winkel bzw. fast tangential auf das Bogensieb 24 auf, wobei wie bei der Vorrichtung gemäß Figur 1 zunächst durch den Aufprall das an den Granulatkörnern 19 anhaftende Wasser weitgehend abgeschleudert wird. Im weiteren Flug der Granulatkörner 19 wandern diese dann über den Bogen des Bogensiebes 24, wobei aufgrund dieser Führung auf die Granulatkörner 19 und damit auf das an ihnen haftende Wasser eine Zentrifugalkraft ausgeübt wird, die zusätzlich für das Abschleudern von Restwasser ausgenutzt wird.

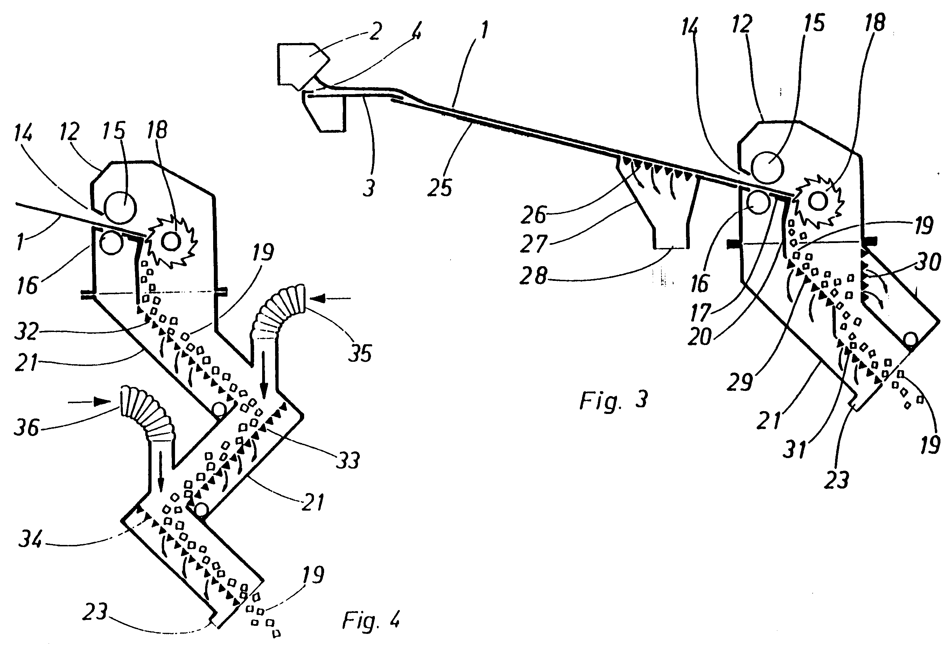

In der Figur 3 ist eine weitere Abwandlung gegenüber der Vorrichtung nach Figur 1 dargestellt, bei der die Kühleinrichtung im wesentlichen aus einer Ablaufrinne 25 besteht, der das von dem Überlauf 4 stammende Kühlwasser von der Zuleitvorrichtung 3 zugeführt wird. In die Ablaufrinne 25 ist das als Auslaß wirkende Vorabscheidungssieb 26 eingebaut, das dann zum Einsatz kommen kann, wenn die durch die Ablaufrinne 25 gegebene Kühlstrecke für eine ausreichende Kühlung der Stränge 1 sorgt, so daß das Kühlwasser vor dem Granulatorgehäuse 12 weitgehend abgeführt werden kann. Das Kühlwasser gelangt dabei durch das Sieb 26 in den Ablauftrichter 27 und wird von dort durch den Hals 28 weggeleitet. Diese Vorabscheidung des Kühlwassers am Ende der Ablaufrinne 25 erleichtert die Trocknung der Granulatorkörner 19 nach dem Schneiden mittels der Messerwalze 18.

Die Granulatkörner 19 treffen hier wie bei der Vorrichtung gemäß Figur 1 auf das Sieb 29, das in gleicher Weise angeordnet ist wie das Sieb 22 in Figur 1. Dem Sieb 29 dicht gegenüber angeordnet ist das weitere Sieb 30, so daß vom Sieb 29 abprallende Granulatkörner 19 anschließend auf das Sieb 30 auftreffen. Am Sieb 30 kann somit nochmals Restwasser von den Granulatkörnern 19 abgeschleudert werden. Die vom Sieb 30 herabfallenden Granulatkörner 19 treffen dann auf das dritte im Abführschacht 21 vorgesehene Sieb 31 auf, über das sie dann gewissermaßen herabrieseln, wobei nochmals eventuell vorhandenes Restwasser abgeschieden werden kann.

Figur 4 zeigt eine Ausführungsform, bei der zunächst wie beim Ausführungsbeispiel gemäß Figur 1 ein dem Aufprall der Granulatkörner 19 dienendes Sieb 32 vorgesehen ist, dem für das Herabrieseln der Granulatkörner 19 zwei weitere Siebe 33 und 34 in Zickzack-Anordnung nachgeschaltet sind. Um insbesondere an den Sieben 33 und 34 haftendes Wasser abzuführen, das gegebenenfalls den kontinuierlichen Durchtritt von Wasser verhindern könnte, sind hier die beiden Luftzuführungen 35 und 36 vorgesehen, durch die auf das Sieb 33 bzw. das Sieb 34 ein Luftstrom aufgeblasen wird. Die Gefahr des Haftens von Wasser an den Sieben ist bei dem Sieb 32 darum geringer, weil auf das Sieb 32 die Granulatkörner 19 mit ihrer relativ hohen kinetischen Energie auftreffen. Die über die Luftzuführungen 35 und 36 in den Abführschacht 21 eingeblasende Luft tritt in erheblichem Umfang durch die Siebe 33 und 34 hindurch und nimmt dabei an diesen anhaftendes Wasser mit.

Es sei noch darauf hingewiesen, daß dem Granulatorgehäuse 12 die verschiedensten Kühleinrichtungen vorgeschaltet werden können, also nicht nur die Transportbänder 6 und 7 oder die Ablaufrinne 25. Es ist auch möglich, z. B. ein die zu kühlenden Stränge führendes Wasserbad dem Granulatgehäuse vorzuschalten. Außerdem sind unter dem Begriff "Sieb" alle Gestaltungen zu verstehen, bei denen Blech oder dergleichen mit einer Vielzahl von Durchlässen solcher Größe versehen ist, daß das Kühlwasser, nicht aber das Granulat, hindurchtreten kann, z. B. also ein Lochblech oder ein Stabsieb.

## Patentansprüche

1. Vorrichtung zum Abkühlen, Granulieren und Trocknen von schmelzflüssig aus Düsen austretenden Strängen (1) aus thermoplastischen Kunststoffen mit einer die Stränge (1) in einem Kühlflüssigkeitsbad führenden Kühleinrichtung (6, 7; 25), der ein eine Messerwalze (18) enthaltendes Granulatorgehäuse (12) und ein daran angeschlossener Abführschacht (21) mit einem Sieb (22, 24, 29, 32) zur Kühlflüssigkeitsabscheidung nachgeordnet sind, **dadurch gekennzeichnet,** daß das Sieb (22, 24, 29, 32) derart angeordnet ist, daß die von der Messerwalze (18) von den Strängen (1) abgetrennten Granulatkörner (19) im wesentlichen mit der den Granulatkörnern (19) von der Messerwalze (18) gegebenen Geschwindigkeit auf direktem Wege ohne Umlenkung auf das Sieb (22, 24, 29, 32) auftreffen, das für den Trocknungsvorgang die kinetische Energie der Granulatkörner (19) ausnutzt.

2. Vorrichtung nach Anspruch 1, **dadurch gekennzeichnet,** daß das Sieb (22,24,29,32) mit einem solchen Winkel in bezug auf die Auftreffrichtung der Granulatkörner (19) vorgesehen ist, daß diese in Richtung auf ein nachgeordnetes Sieb (30) abprallen.

3. Vorrichtung nach Anspruch 2, **dadurch gekennzeichnet,** daß die Hintereinanderschaltung von Sieben (29,30,31;32,33,34) mehrfach vorgesehen ist.

4. Vorrichtung nach einem der Ansprüche 1 bis 3, **dadurch gekennzeichnet,** daß mindestens eines der Siebe als Bogensieb (24) ausgebildet ist.

5. Vorrichtung nach einem der Ansprüche 1 bis 4, **dadurch gekennzeichnet,** daß mindestens einem Sieb (33,34) eine Zuführung (35;36) für aufzublasende Luft zugeordnet ist.

6. Vorrichtung nach einem der Ansprüche 1 bis 5, **dadurch gekennzeichnet,** daß dem Granulatorgehäuse (12) ein Vorabscheider (26) für die Kühlflüssigkeit vorgeordnet ist.

7. Vorrichtung nach einem der Ansprüche 1 bis 6, **dadurch gekennzeichnet,** daß die Kühlung eine den Granulatkörnern (19) innewohnende Wärme beläßt, die nach Abprall der Granulatorkörner auf das bzw. die Siebe (22,24,29,32) für eine weitgehende Verdampfung von die Granulatkörner (19) noch benetzendes Wasser ausreicht.

## Claims

1. Device for cooling, granulating and drying thermoplastic molten strands (1) emerging from dies, comprising a cooling means (6, 7; 25) which leads the strands (1) to a bath of coolant and downstream of which a granulator housing (12) containing a cutting roll (18) and a outlet duct (21) connected thereto with a screen (22, 24, 29, 32) for separating off the coolant are arranged, characterised in that the screen (22, 24, 29, 32) is arranged in such a manner that the grains (19) separated off from the strands (1) by the cutting roll (18) impinge directly on the screen (22, 24, 29, 32) without deflection substantially at the speed imparted to the grains (19) by the cutting roll (18), the screen using the kinetic energy of the grains (19) for the drying process.

2. Device according to claim 1, characterised in that the screen (22, 24, 29, 32) is arranged at such an angle relative to the direction of impingement of the grains (19) that they rebound in the direction of a downstream screen (30).

3. Device according to claim 2, characterised in that a plurality of screens (29, 30, 31; 32, 33, 34) are connected in series.

4. Device according to one of claims 1 to 3, characterised in that at least one of the screens is a sieve-bend screen (24).

5. Device according to one of claims 1 to 4, characterised in that an inlet (35; 36) for blowing air is associated with at least one screen (33, 34).

6. Device according to one of claims 1 to 5, characterised in that a preliminary separator (26) for the coolant is arranged upstream of the granulator housing (12).

7. Device according to one of claims 1 to 6, characterised in that the cooling leaves the grains (19) with an inherent heat which, once the grains have rebounded towards the screen or screens (22, 24, 29, 32), is sufficient for substantial evaporation of the water still wetting the grains (19).

## Revendications

1. Dispositif pour refroidir, granuler et sécher des fils (1) qui sortent en fusion de filières et qui sont en matière thermoplastique, avec un dispositif de refroidissement (6, 7 ; 25) qui conduit les fils (1) dans un bain de liquide de refroidissement et en aval duquel sont agencés un bâti de granulateur (12) contenant un rouleau porte lames (18) et ensuite un puits d'évacuation (21) avec un crible (22, 24, 29, 32) destiné à la séparation du liquide de refroidissement, caractérisé en ce que le crible (22, 24, 29, 32) est agencé de telle sorte que leu grains (19) découpés à partir des fils (1) par le rouleau porte-lames (18) heurtent directement le crible (22, 24, 29, 32) sans être déviés, globalement à la vitesse donnée aux grains (19) par le rouleau porte-lames (18), sachant que le crible exploite pour l'opération de séchage l'énergie cinétique des graine (19).

2. Dispositif selon la revendication 1, caractérisé en ce que le crible (22, 24, 29, 32) est prévu avec un angle tel par rapport à la direction d'incidence des grains (19) que ceux-ci rebondissent en direction d'un autre crible (30) placé en aval.

3. Dispositif selon la revendication 2, caractérisé en ce que l'agencement de cribles (29, 30, 31 ; 32, 33, 34) les une derrière les autres est prévu plusieurs fois.

4. Dispositif selon l'une des revendications 1 à 3, caractérisé en ce que au moins l'un des cribles est construit sous forme de crible courbe (24).

5. Dispositif selon l'une des revendications 1 à 4, caractérisé en ce qu'une arrivée pour de l'air à souffler (35, 36) est associée à au moins un crible (33, 34).

6. Dispositif selon l'une des revendications 1 à 5, caractérisé en ce qu'un séparateur préalable (26) pour le liquide de refroidissement est agencé en amont du bâti de granulateur (12).

7. Dispositif selon l'une des revendications 1 à 6, caractérisé en ce que le refroidissement laisse à l'intérieur des grains (19) une chaleur qui suffit après le rebondissement des graine sur le ou les cribles (22, 24, 29, 32) à une large évaporation de l'eau mouillant encore les grains (19).
